# EUROPÄISCHE PATENTSCHRIFT

(11) **EP 0 731 255 B1**
(45) Veröffentlichungstag und Bekanntmachung des Hinweises auf die Patenterteilung: **26.05.1999**
(21) Anmeldenummer: 96810095.8
(22) Anmeldetag: 16.02.1996
(51) Int. Cl.: F01K 21/04, F02C 6/00

(54) **Verfahren zum Betrieb einer Kraftwerksanlage**
Powerplant system
Système de turbine pour centrales d'électricité

(30) Priorität: 07.03.1995 DE 19508018
(43) Veröffentlichungstag der Anmeldung: 11.09.1996
(73) Patentinhaber: ASEA BROWN BOVERI AG, 5400 Baden (CH)
(72) Erfinder: Frutschi, Hans-Ulrich, 5223 Riniken (CH)

(56) Entgegenhaltungen:
- EP-A- 0 076 529
- EP-A- 0 318 706
- EP-A- 0 620 362
- EP-A- 0 695 860
- WO-A-94/28285
- CH-A- 88 624
- DE-B- 1 239 888
- FR-A- 963 508
- FR-A- 1 007 140
- FR-A- 1 010 954
- US-A- 4 765 142

## Beschreibung

### Technisches Gebiet

Die vorliegende Erfindung betrifft ein Verfahren zum Betrieb einer Kraftwerksanlage gemäss Oberbegriff des Anspruchs 1.

### Stand der Technik

Aus EP-0 462 458 Al ist eine Kraftwerksanlage bekanntgeworden, welche im wesentlichen aus einer Gasturbogruppe, einem nachgeschalteten Abhitzedampferzeuger und einem Injektorsystem besteht. Die genannte Gasturbogruppe als autonome Einheit besteht komponentenmässig aus einem Generator, einem Verdichter, einer Brennkammer und einer Turbine. Die Abgase aus der Turbine werden dem Abhitzedampferzeuger zugeführt, wo sie energetisch weiter genutzt werden. Aus der freigesetzten thermischen Energie aus diesen Abgasen wird in einem Hochdruckteil des Abhitzedampferzeugers ein Hochdruckdampf erzeugt, der dem genannten Injektorsystem zugeführt wird, und dort dessen Treibdüse beaufschlagt. In die Fangdüse dieses Injektorsystems wird eine verdichtete Luft aus dem Verdichter eingeleitet: Diese Luft wird durch die Wirkung aus der Treibdüse weiterverdichtet. Ist der Abhitzedampferzeuger als Zweidruckkessel ausgelegt, sowird der im Niederdruckteil bereitgestellte Dampf beispielsweise der Brennkammer zugeführt. Diese Massnahmen haben primär den finalen Zweck, die Schadstoff-Emissionen, insbesondere die NOx-Emissionen, zu minimieren. Danebst ist es so, dass zwar die spezifische Leistung der Anlage steigt, während die Wirkungsgrad-Ausbeute relativ bescheiden bleibt, so dass sich eine solche Anlage betreffend Wirkungsgrad und auch spezifische Leistung keine Alternative gegenüber einer voll ausgebildeten Kombi anlage bildet.

Des weiteren ist aus WO-A-94/28285 eine Kraftwerksanlage bekanntgeworden, welche im wesentlichen aus einer Gasturbogruppe mit einem nachgeschalteten Abhitzedampferzeuger besteht. Die Turbogruppe selbst besteht aus einem Verdichter, aus einer ersten und zweiten Brennkammer, mit jeweils dazwischengeschalteten Turbinen. Die Abgase aus der letzten Turbine durchströmen den Abhitzedampferzeuger und die dort produzierte Dampfmenge wird in die Gasturbogruppe eingeblasen, hier vorzugsweise in die Brennkammern. Indessen, beim Betrieb eines solchen Abhitzedampferzeugers fallen stufenweise verschiedene Dampfqualitäten an, bei welchen exergetisch kontraproduktiv wäre, sie ganzheitlich beispielsweise zu überhitztem Dampf aufzubereiten. Von daher wirkt die hier vorgeschlagene Dampferzeugung und deren Einblasung in die Gasturbogruppe als zu wenig verfeinert, insbesondere wenn es sich um Gasturbogruppen mit einer sequentiellen Verbrennung handelt, denn damit lässt sich keine Optimierung des Wirkungsgrades und keine schnelle Ansprechbarkeit bei Lastveränderungen erzielen.

### Darstellung der Erfindung

Hier will die Erfindung Abhilfe schaffen. Der Erfindung, wie sie in den Ansprüchen gekennzeichnet ist, liegt die Aufgabe zugrunde bei einem Verfahren der eingangs genannten Art den Wirkungsgrad und die spezifische Leistung durch Rückführung von Dampfmengen in die Gasturbogruppe kräftig zu steigern.

Die Grundschaltung der Gasturbogruppe ist auf eine sequentielle Verbrennung ausgelegt. Eine solche Gasturbogruppe eignet sich überraschenderweise in ganz besonderem Masse für die Einblasung eines in einem nachgeschalteten Abhitzedampferzeuger erzeugten Dampfes in deren Schaltung. Die hierbei erzielbaren Leistungen liegen, je nach Kreislaufanordnung, um einen Faktor zwei bis drei über der Leistung einer solchen Gasturbogruppe ohne Dampfeinblasung. Des weiteren erreicht der Wirkungsgrad bei einer solchen mit Dampfeinblasung betriebenen Gasturbogruppe Werte, welche sehr nahe an jene herankommen, welche mit den besten Kombianlagen zu erreichen sind.

Ein wesentlicher Vorteil der Erfindung ist darin zu sehen, dass die spezifischen Kosten einer solchen Gasturbogruppe mit Dampfeinblasung wesentlich niedriger als jene einer Kombianlage ausfallen, womit sich sehr lukrative Perspektiven ergeben.

Ein weiterer Vorteil der Erfindung ist darin zu sehen, dass der Wasserverbrauch einer solchen Anlage nur etwa zwei Drittel desjenigen eines modernen Dampfkreiswerkes mit Nasskühlturm beträgt; in etwa liegt der Wasserverbrauch dieser Anlage in gleicher Grössenordnung desjenigen einer Kombianlage gleicher Leistung. Zwar ist es richtig, dass das Wasser hierfür einer Teilaufbereitung unterzogen werden muss, deren Kosten aber dermassen unerheblich ausfallen, dass sie die Stromerzeugungskosten praktisch nicht beeinflussen.

Die zu erwartenden niedrigen spezifischen Anlagekosten, der hohe Wirkungsgrad und die schnelle Anfahr- und Belastungsmöglichkeit prädestinieren dieses Konzept auch für den.Mittellast- und Spitzenlast-Betrieb. Das Hauptanwendungsgebiet dürfte jedoch der Grundlastbetrieb sein.

Vorteilhafte und zweckmässige Weiterbildungen der erfindungsgemässen Aufgabenlösung sind in den weiteren Ansprüchen gekennzeichnet.

Im folgenden wird anhand der Zeichnungen Ausführungsbeispiele der Erfindung dargestellt und näher erläutert. Alle für das unmittelbare Verständnis der Erfindung nicht erforderlichen Elemente sind fortgelassen. Die Strömungsrichtung der Medien ist mit Pfeilen angegeben. Gleiche Elemente sind in den verschiedenen Figuren mit den gleichen Bezugszeichen versehen.

### Kurze Beschreibung der Zeichnungen

Es zeigt:
- Fig. 1: eine Schaltung einer Gasturbogruppe mit sequentieller Verbrennung, mit einem Abhitzedampferzeuger und einer Dampfeinblasung an geeigneter Stelle in die Gasturbogruppe,
- Fig. 2: eine weitere Schaltung gemäss Fig. 1, mit modifizierter Dampfeinblasung,
- Fig. 3: eine weitere Schaltung nach Fig. 1, mit einer dazwischen geschalteten Dampfturbine und
- Fig. 4: eine weitere Schaltung gemäss Fig. 3, wobei der aus der Dampfturbine ausströmende Gegendruckdampf zwischenüberhitzt wird.

### Wege zur Ausführung der Erfindung, gewerbliche Verwertbarkeit

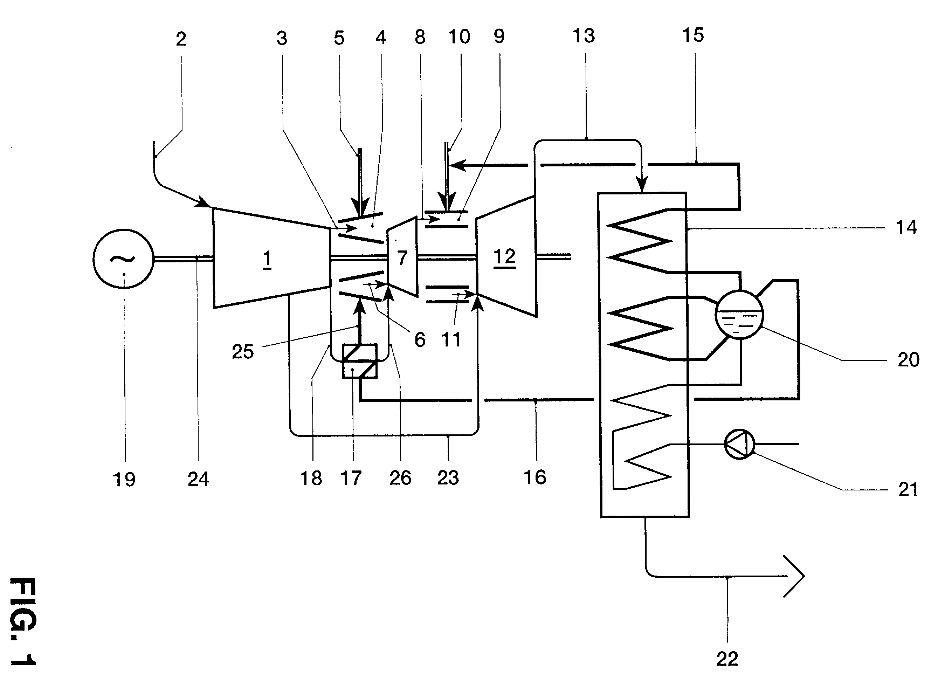

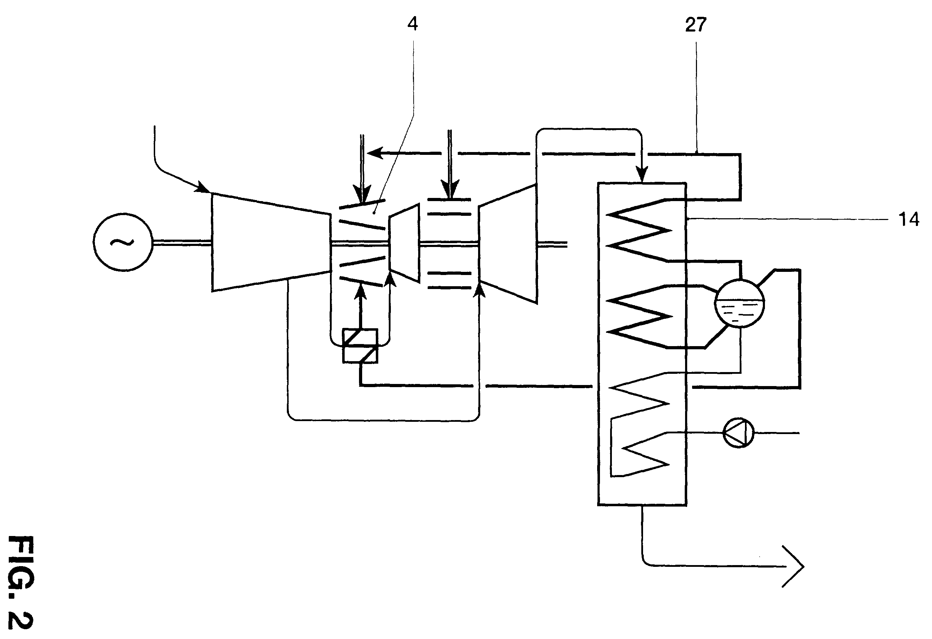

Fig. 1 zeigt eine Gasturbogruppe, welche mit einem Abhitzedampferzeuger 14 in Wirkverbindung steht, wobei der in diesem Abhitzedampferzeuger 14 bereitgestellte Dampf an geeigneter Stelle in die Gasturbogruppe eingeblasen wird. Zu den zum Einsatz gelangenden Brennstoffen ist folgendes zu sagen: Der notwendige Brennstoff kann beispielsweise durch eine mit der Gasturbogruppe zusammenwirkende Kohlenvergasung bereitgestellt werden. Selbstverständlich ist es auch möglich, die zum Einsatz gelangenden Brennstoffe aus einem Primärnetz zu beziehen. Wird die Versorgung eines gasförmigen Brennstoffes zum Betrieb der Gasturbogruppe über eine Pipeline erbracht, so kann das Potential aus der Druck- und/oder Temperaturdifferenz zwischen Primärnetz und Verbrauchernetz für die Belange der Gasturbogruppe, oder allgemein der Anlage, rekuperiert werden. Die Gasturbogruppe als autonome Einheit besteht aus einem Verdichter 1, einer dem Verdichter 1 nachgeschalteten ersten Brennkammer 4, einer dieser Brennkammer 4 nachgeschalteten ersten Turbine 7, einer dieser Turbine 7 nachgeschalteten zweiten Brennkammer 9 und einer dieser Brennkammer 9 nachgeschalteten zweiten Turbine 12. Die genannten Strömungsmaschinen 1, 7, 12 weisen eine einheitliche Rotorwelle 24 auf, welche durch eine nicht ersichtliche Kupplung mit der ebenfalls nicht ersichtlichen Welle eines Generators 19 gekoppelt ist. Diese Rotorwelle 24 ist vorzugsweise auf zwei nicht gezeigten Lagern gelagert, welche kopfseitig des Verdichters 1 und stromab der zweiten Turbine 12 plaziert sind. Die Verdichterstufe kann je nach Auslegung, beispielsweise um die spezifische Leistung zu steigern, in zwei nicht gezeigte Teilverdichter unterteilt werden. Die angesaugte Luft 2 strömt nach deren Verdichtung vorzugsweise in ein nicht gezeigtes Gehäuse, das in sich den Verdichteraustritt und die erste Turbine 7 einschliesst. In diesem Gehäuse ist auch die erste Brennkammer 4 untergebracht, welche vorzugsweise als zusammenhängende Ringbrennkammer ausgebildet ist und worin die verdichtete Luft 3 einströmt. Selbstverständlich kann die verdichtete Luft zur ersten Brennkammer 4 aus einer nicht gezeigten Luftspeicheranlage beigestellt werden. Die Ringbrennkammer 4 weist kopfseitig, auf den Umfang verteilt, eine Anzahl nicht dargestellte Brenner auf, welche die Verbrennung aufrechterhalten. An sich können hier Diffusionsbrenner zum Einsatz gelangen. Im Sinne einer Reduzierung der Schadstoff-Emissionen, insbesondere was die NOx-Emissionen betrifft, und zur Steigerung des Wirkungsgrades ist es vorteilhaft, eine Anordnung von Vormischbrennern gemäss EP-0 321 809 B1 vorzusehen, wobei der Patentgegenstand aus dieser Druckschrift integrierender Bestandteil dieser Beschreibung ist; darüber hinaus gilt dies auch hinsichtlich der dort beschriebenen Art der Brennstoffzuführung und der Zusammensetzung der Verbrennungsluft, beispielsweise mit einem rückgeführten Rauchgas angereichert, die in der vorliegenden Figur 1 anhand des Pfeiles 5 versinnbildlicht ist. Bezüglich Art der Zuführung und der Zusammensetzung der Verbrennungsluft gilt dies auch für die zweite Brennkammer 9. Was die Anordnung dieser Vormischbrenner in Umfangsrichtung der Ringbrennkanner 4 betrifft, so kann eine solche bei Bedarf von der üblichen Konfiguration gleicher Brenner abweichen, stattdessen können unterschiedlich grosse Vormischbrenner zum Einsatz kommen. Dies geschieht vorzugsweise so, dass jeweils zwischen zwei grossen Vormischbrennern ein kleiner Vormischbrenner gleicher Konfiguration disponiert ist. Die grossen Vormischbrenner, welche die Funktion von Hauptbrennern erfüllen, stehen zu den kleinen Vormischbrennern, welche die Pilotbrenner dieser Ringbrennkammer 4 sind, bezüglich der sie durchströmenden Verbrennungsluft, also der verdichteten Luft 3 aus dem Verdichter 1, in einem Grössenverhältnis, das fallweise festgelegt wird. Im gesamten Lastbereich der Ringbrennkammer 4 arbeiten die Pilotbrenner als selbstgängige Vormischbrenner, wobei die Luftzahl fast konstant bleibt. Die Zu- oder Abschaltung der Hauptbrenner erfolgt nach bestimmten anlagespezifischen Vorgaben. Weil die Pilotbrenner im ganzen Lastbereich bei idealem Gemisch gefahren werden können, sind die NOx-Emissionen auch bei Teillast sehr gering. Bei einer solchen Konstellation kommen die umlaufenden Stromlinien im Frontbereich der Ringbrennkammer 4 sehr nahe an die Wirbelzentren der Pilotbrenner heran, so dass eine Zündung an sich nur mit diesen Pilotbrennern möglich ist. Beim Hochfahren wird die Brennstoffmenge 5, die über die Pilotbrenner zugeführt wird, soweit gesteigert, bis die Pilotbrenner ausgesteuert sind, d.h. bis die volle Brennstoffmenge zur Verfügung steht. Die Konfiguration wird so gewählt, dass dieser Punkt der jeweiligen Lastabwurfbedingungen der Gasturbogruppe entspricht. Die weitere Leistungssteigerung erfolgt dann über die Hauptbrenner. Bei der Spitzenlast der Gasturbogruppe sind sonach auch die Hauptbrenner voll ausgesteuert. Weil die durch die Pilotbrenner inizierte Konfiguration "kleiner" heisser Wirbelzentren zwischen den von den Hauptbrennern stammenden "grossen" kühleren Wirbelzentren extrem instabil ausfällt, wird auch bei mager betriebenen Hauptbrennern im Teillastbereich ein sehr guter Ausbrand mit zusätzlich zu den NOx-Emissionen niedrigen CO- und UHC-Emissionen erreicht, d.h. die heissen Wirbel der Pilotbrenner dringen sofort in die grossen Wirbel der Hauptbrenner ein. Selbstverständlich kann die Ringbrennkammer 4 aus einer Anzahl einzelner rohrförmiger Brennräume bestehen, welche allenfalls schrägringförmig, bisweilen auch schraubenförmig, um die Rotorachse angeordnet sind. Diese Ringbrennkammer 4, unabhängig von ihrer Auslegung, wird und kann geometrisch so angeordnet werden, dass sie auf die Rotorlänge praktisch keinen Einfluss ausübt. Auf die daraus resultierenden Vorteile aus einer solchen Disposition, wird weiter unten näher eingegangen. Die Heissgase 6 aus dieser Ringbrennkammer 4 beaufschlagen die unmittelbar nachgeschaltete erste Turbine 7, deren kalorisch entspannende Wirkung auf die Heissgase 6 bewusst minimal gehalten wird, d.h. diese Turbine 7 wird demnach aus nicht mehr als eine bis zwei Laufschaufelreihen bestehen. Bei einer solchen Turbine 7 wird nötig sein, einen Druckausgleich an den Stirnflächen zwecks Stabilisierung des Axialschubes vorzusehen. Die in Turbine 7 teilentspannten heissen Abgase 8, welche unmittelbar in die zweite Brennkammer 9 strömen, weisen aus dargelegten Gründen eine recht hohe Temperatur auf, vorzugsweise ist sie betreibungsspezifisch so auszulegen, dass sie sicher noch um 1000°C beträgt. Diese zweite Brennkammer 9 hat im wesentlichen die Form eines zusammenhängenden ringförmigen axialen oder quasi-axialen Zylinders; diese Brennkammer 9 kann selbstverständlich auch aus einer Anzahl axial, quasi-axial oder schraubenförmig angeordneten und in sich abgeschlossenen Brennräumen bestehen. Was die Konfiguration der ringförmigen, aus einem einzigen Brennraum bestehenden Brennkammer 9 betrifft, so sind in Umfangsrichtung dieses ringförmigen Zylinders mehrere Brennstofflanzen disponiert, welche in der Fig. 1 mit Pfeil 10 versinnbildlicht sind, wobei sie selbstverständlich über eine nicht gezeigte Ringleitung miteinander verbunden sein können. Diese Brennkammer 9 weist an sich keinen Brenner auf: Die Verbrennung des in die aus der Turbine 7 kommenden heissen Abgase 8 eingedüsten Brennstoffes 10 geschieht hier durch Selbstzündung, soweit freilich das Temperaturniveau eine solche Betreibungsart zulässt. Ausgehend davon, dass die Brennkammer 9 mit einem gasförmigen Brennstoff, also beispielsweise Erdgas, betrieben wird, muss für eine Selbstzündung eine Temperatur der heissen Abgase 8 aus der Turbine 7 um die 1000°C vorliegen. Demnach, um Selbstzündung eines Erdgases in der Brennkammer 9 sicherzustellen, muss die Austrittstemperatur der heissen Abgase 8 aus der Turbine 7 noch sehr hoch sein, wie oben dargelegt um die 1000°C, und dies selbstverständlich auch bei Teillastbetrieb, was für die Auslegung dieser Turbine 7 eine ursächliche Rolle spielt. Um die Betriebssicherheit und einen hohen Wirkungsgrad bei einer auf Selbstzündung ausgelegten Brennkammer zu gewährleisten, ist es eminent wichtig, dass die Flammenfront ortsmässig stabil bleibt. Zu diesem Zweck werden in dieser Brennkammer 9, vorzugsweise an der Innen- und Aussenwand, in Umfangsrichtung disponiert, eine Reihe von in der Figur nicht gezeigten Wirbel-Generatoren vorgesehen, welche in axialer Richtung vorzugsweise stromauf der Brennstofflanzen 10 plaziert sind. Die Aufgabe dieser Wirbel-Generatoren besteht darin, Wirbel zu erzeugen, welche eine Rückströmzone, analog derjenige aus den Vormischbrennern in der Ringbrennkammer 4, induzieren. Da es sich bei dieser Brennkammer 9, aufgrund der axialen Anordnung und der Baulänge, um eine Hochgeschwindigkeitsbrennkammer handelt, deren mittlere Geschwindigkeit grösser ca. 60 m/s beträgt, müssen die wirbelerzeugenden Elemente, also die Wirbel-Generatoren, strömungskonform ausgebildet sein. Anströmungsseitig sollen diese vorzugsweise aus einer tetraederförmigen Form mit anströmungsschiefen Flächen bestehen. Die wirbelerzeugenden Elemente können entweder an der Aussenfläche oder an der Innenfläche der Brennkammer 5 plaziert sein, oder beiderorts wirken. Die schiefen Flächen zwischen den aussenliegenden und innenliegenden wirbelerzeugenden Elemente sind vorzugsweise spiegelbildlich angeordnet, dergestalt, dass der Durchflussquerschnitt in der Brennkammer 9 stromab dieses Ortes im Bereich der Eindüsung des Brennstoffes 10 eine wirbelerzeugende Erweiterung erfährt. Selbstverständlich können die wirbelerzeugenden Elemente auch axial zueinander verschoben sein. Die abströmungsseitige Fläche der wirbelerzeugenden Elemente ist im wesentlichen radial ausgebildet, so dass sich ab dort eine Rückströmzone einstellt. Hinsichtlich der spezifischen Ausgestaltung der Wirbel-Generatoren wird auf die Druckschrift EP-0 619 133 Al verwiesen, welche integrierender Bestandteil dieser Beschreibung ist. Die Selbstzündung in der Brennkammer 9 muss indessen auch in den transienten Lastbereichen sowie im Teillastbereich der Gasturbogruppe gesichert bleiben, d.h. es müssen Hilfsvorkehrungen vorgesehen werden, welche die Selbstzündung in der Brennkammer 9 auch dann sicherstellen, wenn sich allenfalls eine Flexion der Temperatur der heissen Abgase 8 im Bereich der Eindüsung des Brennstoffes 10 einstellen sollte. Um eine sichere Selbstzündung des in die Brennkammer 9 eingedüsten gasförmigen Brennstoffes 10 zu gewährleisten, wird diesem Brennstoff eine kleine Menge eines anderen Brennstoffes mit einer niedrigeren Zündtemperatur beigegeben. Als "Hilfsbrennstoff" eignet sich hier beispielsweise Brennöl sehr gut. Der flüssige Hilfsbrennstoff, entsprechend eingedüst, erfüllt die Aufgabe, sozusagen als Zündschnur zu wirken, und löst auch dann eine Selbstzündung in der Brennkammer 9 aus, wenn die heissen Abgase 8 aus der ersten Turbine 7 eine Temperatur unterhalb des angestrebten optimalen Niveaus einnehmen sollten. Diese Vorkehrung, Brennöl zur Sicherstellung einer Selbstzündung vorzusehen, erweist sich freilich immer dann als besonders angebracht, wenn die Gasturbogruppe mit reduzierter Last betrieben wird. Diese Vorkehrung trägt des weiteren entscheidend dazu bei, dass die Brennkammer 9 eine minimale axiale Ausdehnung aufweisen kann. Die kurze Baulänge der Brennkammer 9, die Wirkung der gewürdigten Wirbel-Generatoren zur Flammenstabilisierung sowie die fortwährende Sicherstellung der Selbstzündung sind ursächlich dafür verantwortlich, dass die Verbrennung sehr rasch erfolgt, und die Verweilzeit des Brennstoffes im Bereich der heissen Flammenfront minimal bleibt. Eine unmittelbar verbrennungsspezifisch messbare Wirkung hieraus betrifft die NOx-Emissionen, welche eine Minimierung erfahren, dergestalt, dass sie nunmehr kein Thema mehr bilden. Diese Ausgangslage ermöglicht ferner, den Ort der Verbrennung klar zu definieren, was sich auf eine optimierte Kühlung der Strukturen dieser Brennkammer 9 niederschlägt. Die in der Brennkammer 9 aufbereiteten Heissgase 11 beaufschlagen anschliessend eine nachgeschaltete zweite Turbine 12. Die thermodynamischen Kennwerte der Gasturbogruppe können so ausgelegt werden, dass die Abgase 13 aus der zweiten Turbine 12 noch soviel kalorisches Potential aufweisen, um damit einen nachgeschalteten Abhitzedampferzeuger 14 zu betreiben. Wie bereits bei der Beschreibung der Ringbrennkammer 4 hingewiesen wurde, ist diese geometrisch so angeordnet, dass sie auf die Rotorlänge praktisch keinen Einfluss ausübt. Des weiteren konnte festgestellt werden, dass die zweite Brennkammer 9 zwischen Abströmungsebene der ersten Turbine 7 und Anströmungsebene der zweiten Turbine 12 eine minimale Länge einnimmt. Da ferner die Entspannung der Heissgase 6 in der ersten Turbine 7, aus dargelegten Gründen, über wenige Laufschaufelreihen geschieht, lässt sich eine Gasturbogruppe bereitstellen, deren Rotorwelle 24 aufgrund ihrer minimierten Länge bloss auf zwei nicht dargestellten Lagern abstützbar ist. Verdichterseitig weist die Rotorwelle 24 eine nicht dargestellte Kupplung auf, welche der Leistungsabgabe dient. Es ist zur Steigerung des Wirkungsgrades der Gasturbogruppe von Vorteil, wenn vor der zweiten Brennkammer 9 ein in der Figur nicht ersichtlicher Kleindiffusor vorgesehen wird. Damit liesse sich der Totaldruckverlust im Gesamtsystem vermindern. Es lässt sich anhand der üblichen Diffusorauslegungsdiagramme beweisen, dass sich bereits bei einer minimalen Länge des Diffusors grosse Rückgewinnungsraten des dynamisches Druckes erreichen lassen. Die Verdichterstufen können mit einer Zwischenkühlung ausgestattet sein. Um bei der Zugrundelegung einer Zwischenkühlung die geometrische Grundkonzeption der Gasturbogruppe, wie sie aus der Figur dargelegt wird, nicht zu alterieren, wird vorgeschlagen, einen in der Figur nicht ersichtlichen Zwischenkühler vorzusehen, der innerhalb des Statorgehäuses und stromab der Verdichterstufen plaziert ist. Die Kühlung bei diesem Zwischenkühler geschieht mittelbar oder unmittelbar. Bei unmittelbarer Zwischenkühlung kann dies beispielsweise durch ein Aggregat geschehen, dessen Betrieb auf Verdunstung des eingedüsten Wassers ausgelegt ist. Somit ergibt sich die Konfiguration, dass übliche Verbindungsleitungen zu einem ausserhalb des Statorgehäuses plazierten Zwischenkühler, und von diesem Zwischenkühler zurück durch das Statorgehäuse zur nächsten Verdichterstufe völlig entfallen. Die Abgase 13 aus der zweiten Turbine 12 durchströmen, wie bereits dargelegt, den Abhitzedampferzeuger 14, der mit mindestens einer Trommel 20 und einer Speisewasserpumpe 21 ergänzt ist. Die im Abhitzedampferzeuger 14 kalorisch ausgenutzten Abgase 13 strömen dann als Rauchgase 22 weiter. Der unterkritisch arbeitende Abhitzedampferzeuger 14 stellt zwei Arten von Dampf zur Verfügung: Ein Teil eines überhitzten Dampfes 15 wird direkt in den engeren oder weiteren Bereich der zweiten Brennkammer 9 eingeblasen, oder in die erste Brennkammer 4, wie dies aus Fig. 2 hervorgeht. Ein weiterer Teil wird als Sattdampf 16, womit die Verdampfung bereits erfolgt ist, aus der Trommel 20 entnommen, und strömt dann zunächst durch einen Wärmetauscher 17. Durch diesen Wärmetauscher 17 strömt auf der anderen Seite, beispielsweise in Gegenstromprinzip, ein Teil aus dem Verdichter 1 abgezweigte verdichtete Luft 18. Der Sattdampf 16 erfährt sonach im Wärmetauscher 17 eine Ueberhitzung durch Verdichterwärme, womit eine 100%ige Energierückgewinnung stattfindet. Auf der anderen Seite findet auch eine Exergierückgewinnung statt, die, abgesehen von der Temperaturdifferenz im Wärmetauscher 17, ebenfalls eine vollständige ist. Bei dieser Schaltung ist zu berücksichtigen, dass nur ein Teil des anfallenden Sattdampfes im Wärmetauscher 17 überhitzt werden kann, wobei vom im Abhitzedampferzeuger 14 anfallenden Dampf ca. 70% als überhitzten Dampf 15 und ca. 30% als Sattdampf 16 zum Einsatz gelangen. Der im Wärmetauscher 17 überhitze Dampf 15 strömt in die erste Brennkammer 4 und bewirkt dann eine kräftige Leistungs- und Wirkungsgradsteigerung einer solchen Anlage. Die im Wärmetauscher 17 abgekühlte Verdichterluft dient dann als hochwertige Kühlluft 26 für die kalorisch hochbelasteten Aggregate der Anlage. Die Figur zeigt hier beispielsweise die Einleitung der Kühlluft 26 in die erste Turbine 7. Die Figur zeigt des weiteren eine Teilentnahme einer weiteren Verdichterluft 23, welche als Kühlluft beispielsweise für die zweite Turbine 12 zum Einsatz gelangt. Auch bei dieser Verdichterluft 23 lässt sich eine Wärmetauschung im obigen Sinne bewerkstelligen, indem ein weiterer Wärmetauscher vorgesehen wird, der die gleiche Funktion wie der Wärmetauscher 17 erfüllt. Die hierbei erzielbaren Leistungen liegen, je nach Kreislaufanordnung, um einen Faktor 2 bis 2,5 über der Leistung der Gasturbogruppe ohne Dampfeinblasung. Dabei erreicht der Wirkungsgrad Werte, welche sehr nahe an jene herankommen, welche mit den besten Kombianlagen erreichbar sind. Da die spezifischen Kosten einer solchen Gasturbogruppe mit Dampfeinblasung wesentlich niedriger sind als jene einer Kombianlage, ergibt sich daraus eine Anlage von hoher wirtschaftlicher Akzeptanz. Dieser überraschende Effekt steht in engster Verbindung mit einer sequentiell befeuerten Gasturbogruppe, denn hier, im Gegensatz zu den konventionellen Gasturbogruppen, kann der Dampf zunächst über ein grosses Dampfgefälle expandieren, des weiteren wird der eingeblasene Dampf zwangsläufig auch zwischenüberhitzt, und zuletzt wird durch die hohe Temperatur der Abgase 13 aus der zweiten Turbine 12 eine sehr hohe und hochwertige Dampfmenge erzeugt.

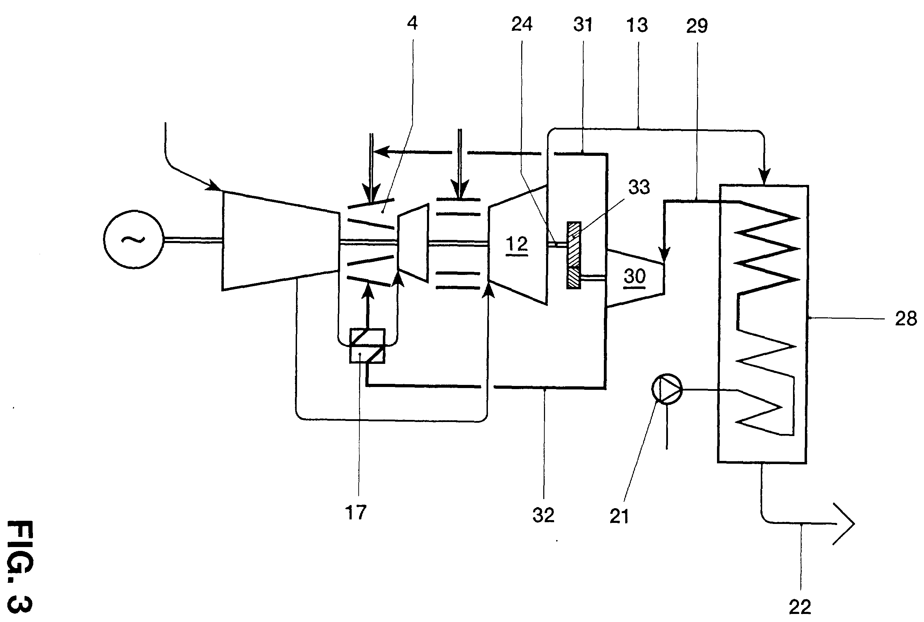

Die Unterschiede von Fig. 2 gegenüber Fig. 1 sind oben bereits gewürdigt worden: Der direkt im Abhitzedampferzeuger 14 erzeugte überhitzte Dampf 27 wird in den engeren oder weiteren Bereich der ersten Brennkammer 4 eingeblasen. Weitergehende schaltungstechnische Unterschiede sind nicht gegeben. Fig. 3 zeigt eine Anordnung weitgehend nach Fig. 1, wobei aber hier Dampf mit vorzugsweise überkritischem Druck zur Anwendung gelangt. Die Abgase 13 aus der zweiten Turbine 12 durchströmen auch hier einen Abhitzedampferzeuger 28, der allerdings keine Trommel aufweist. Der daraus anfallende überhitzte Dampf 29 beaufschlagt zunächst eine Dampfturbine 30, welche über ein Getriebe 33 mit der Rotorwelle 24 verbunden ist. Aus der genannten Dampfturbine 30 strömt ein Teil des Gegendruckdampfes 31 direkt in den engeren oder weiteren Bereich der ersten Brennkammer 4, während ein anderer Teil des Gegendruckdampfes 32 dieselbe Ueberhitzung gemäss Fig. 1 oder 2 erfährt, bevor er abströmungsseitig des Wärmetauschers 17 ebenfalls in die erste Brennkammer 4 eingeblasen wird. Diese Anordnung ermöglicht eine Leistungssteigerung markanteren Ausmasses gegenüber der Anordnung gemäss Fig. 2, bis zu einem Faktor 3 der Leistung der Gasturbogruppe, wobei der Wirkungsgrad etwa in gleicher Höhe erhalten bleibt.

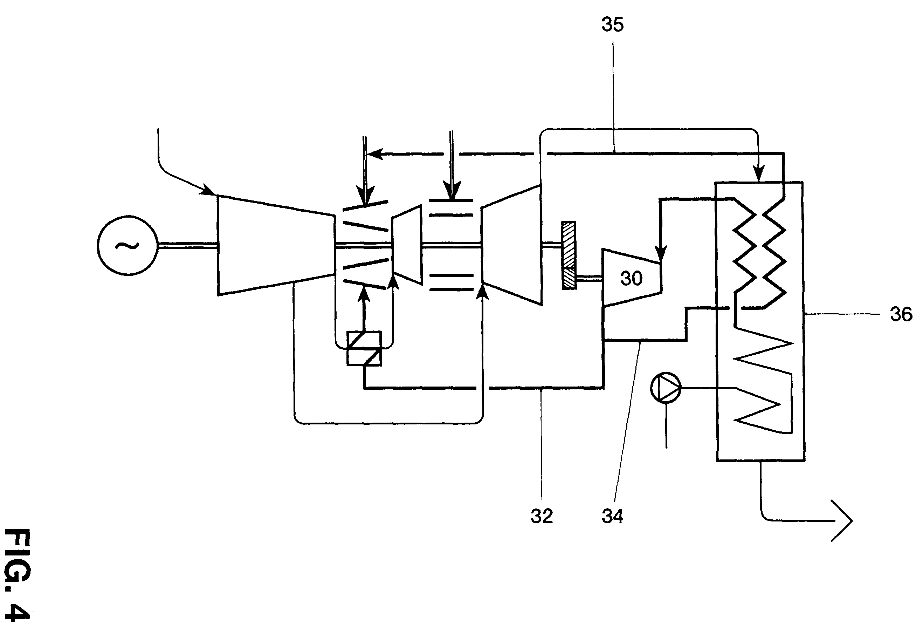

Fig. 4 zeigt eine weitere Anordnung, welche, zwar bei reduzierter spezifischer Arbeit eine weitere bemerkenswerte Wirkungsgradsteigerung ergibt. Ein Teil 34 des Gegendruckdampfes 32 aus der Dampfturbine wird in einen entsprechend ausgebildeten Abhitzedampferzeuger 36 rückgeführt und dort zwischen-überhitzt, bevor dieser Dampf 35 an geeigneter Stelle in die Gasturbogruppe eingeblasen wird. Der restliche Gegendruckdampf 32 wird in üblicher Manier ebenfalls überhitzt (Vgl. Fig. 1-3) und in die Gasturbogruppe an geeigneter Stelle eingeblasen.

Im Lichte der Fig. 1-4 wird noch auf folgende Schaltungen hingewiesen:
a) Mindestens ein Teil des aus dem Abhitzedampferzeuger 14, 28 oder 36 stammenden überhitzten Dampfes 15, 27 oder 35 wird dem Brennstoff 5, 10 einer Brennkammer 7, 12 beigemischt. Mit dieser Vorkehrung lässt sich nicht nur die Leistung der Anlage steigern, sondern das hiermit gebildete Brennstoff/Dampf-Gemisch lässt eine vorgemischte Verbrennung zu.
b) Sowohl der überhitzte Dampf, als auch der Sattdampf 16 oder der Gegendruckdampf 32 lassen sich als Kühlmedien für die thermisch belasteten Strukturen der Gasturbogruppe einsetzen, wobei dann auf aus dem Prozess abgezweigte Kühlluft verzichtet werden kann, was sich wiederum positiv auf den Wirkungsgrad der Anlage niederschlägt.
c) Die unter b) genannten Dampfmengen lassen sich auch als Treibmittel im Zusammenhang mit einem Injektor bei der Brennstoffeindüsung verwenden, womit bei Bedarf die Impulsgrade bei dieser Brennstoffeinbringung erhöht werden.
d) Wird im Zusammenhang mit der Bereitstellung einer Kühlluft 26 auf den Einsatz von Wärmetauschern zurückgegriffen, so lässt sich die Schaltung dergestalt erweitern, dass für die jeweilige Kühlluftmenge zu jeder Brennkammer 7, 12 einen individuellen Wärmetauscher vorgesehen wird. Damit lässt sich die Effizienz bei der Bereitstellung der Kühlluft maximieren. Die Darstellung eines zweiten Wärmetauschers zu diesem Zweck ist indessen in den verschiedenen Figuren nicht näher aufgenommen worden, da dies für den Fachmann leicht zu erfassen ist.

### Bezugszeichenliste

- 1: Verdichter
- 2: Angesaugte Luft
- 3: Verdichtete Luft
- 4: Erste Brennkammer
- 5: Brennstoff, Brennstoffzuführung
- 6: Heissgase
- 7: Erste Turbine
- 8: Heisse Abgase
- 9: Zweite Brennkammer
- 10: Brennstoff, Brennstoffzuführung, Brennstofflanze
- 11: Heissgase
- 12: Zweite Turbine
- 13: Abgase
- 14: Abhitzedampferzeuger
- 15: Ueberhitzter Dampf
- 16: Sattdampf
- 17: Wärmetauscher
- 18: Abgezweigte verdichtete Luft
- 19: Generator
- 20: Trommel
- 21: Speisewasserpumpe
- 22: Rauchgase
- 23: Teil der Verdichterluft
- 24: Rotorwelle
- 25: Ueberhitzter Dampf
- 26: Kühlluft
- 27: Ueberhitzter Dampf
- 28: Abhitzedampferzeuger
- 29: Ueberhitzter Dampf
- 30: Dampfturbine
- 31: Gegendruckdampf
- 32: Gegendruckdampf
- 33: Getriebe
- 34: Teil des Gegendruckdampfes 32
- 35: Zwischenüberhitzter Dampf im Abhitzedampferzeuger
- 36: Abhitzedampferzeuger

## Patentansprüche

1. Verfahren zum Betrieb einer Kraftwerksanlage, welche im wesentlichen aus einer Gasturbogruppe und einem nachgeschalteten Abhitzedampferzeuger (14, 28, 36), der von Abgasen (13) aus der Gasturbogruppe durchströmt wird, besteht, wobei die Gasturbogruppe ihrerseits im wesentlichen aus einer Verdichtereinheit (1), einer stromab der Verdichtereinheit wirkenden ersten Brennkammmer (4), einer stromab der ersten Brennkammer wirkenden ersten Turbine (7), einer stromab der ersten Turbine wirkenden zweiten Brennkammer (9) und einer stromab der zweiten Brennkammer wirkenden zweiten Turbine (12) besteht, wobei die Brennkammern mit einem gasförmigen und/oder flüssigen Brennstoff (5, 10) betrieben werden und wobei ein Teil des in dem Abhitzedampferzeuger (14, 28, 36) produzierten überhitzten Dampfes (15, 27, 35) an geeigneter Stelle in die Gasturbogruppe eingeblasen wird, dadurch gekennzeichnet, dass der andere Teil des in dem Abhitzedampferzeuger (14, 28, 36) anfallenden Sattdampfes (16) und/oder eines anfallenden Gegendruckdampfes (32) über mindestens einen mit einer Verdichterluft (18) durchströmten Wärmetauscher (17) geleitet wird, und dass ein aus dem Wärmetauscher (17) anfallender überhitzter Dampf (25) ebenfalls an geeigneter Stelle in die Gasturbogruppe eingeblasen wird.

2. Verfahren nach Anspruch 1, dadurch gekennzeichnet, dass mindestens ein Teil des in dem Abhitzedampferzeuger überhitzten Dampfes (15, 27, 35) dem Brennstoff (5, 10) mindestens einer Brennkammer (7, 12) beigemischt wird.

3. Verfahren nach Anspruch 1, dadurch gekennzeichnet, dass mindestens ein Teil des in dem Abhitzedampferzeuger überhitzten Dampfes (15, 27, 35) in mindestens eine Brennkammer (7, 12) eingeleitet wird.

4. Verfahren nach Anspruch 1, dadurch gekennzeichnet, dass mindestens ein Teil des in dem Abhitzedampferzeuger überhitzten Dampfes (15, 27, 35) oder des Sattdampfes (16) oder des Gegendruckdampfes (32) vorweg als Kühlmedium für die heissen Strukturen der Gasturbogruppe verwendet wird.

5. Verfahren nach Anspruch 1, dadurch gekennzeichnet, dass mindestens ein Teil des überhitzten Dampfes (15, 27, 35) oder des Sattdampfes (16) oder des Gegendruckdampfes (32) als Treibmittel für die Eindüsung des Brennstoffes (5, 10) in die betreffende Brennkammer (7, 12) verwendet wird.

6. Verfahren nach Anspruch 1, dadurch gekennzeichnet, dass der Gegendruckdampf (32) aus einer stromab des Abhitzedampferzeugers (28, 36) wirkenden Dampfturbine (30) strömt, welche mit mindestens einem Teil eines im Abhitzedampferzeuger (28, 36) anfallenden überhitzten Dampfes (29) betrieben wird.

7. Verfahren nach Anspruch 6, dadurch gekennzeichnet, dass ein Teil des aus der Dampfturbine (30) ausströmenden Gegendruckdampfes (31) an geeigneter Stelle in die Gasturbogruppe eingeleitet wird.

8. Verfahren nach Anspruch 6, dadurch gekennzeichnet, dass die Dampfturbine (30) als Bestandteil eines der Gasturbogruppe nachgeschalteten Dampfkreislaufes betrieben wird, und dass der Dampf dieses Dampfkreislaufes aus dem Abhitzedampferzeuger stammt, welcher mit den Abgasen aus der Gasturbogruppe betrieben wird.

9. Verfahren nach Anspruch 1, dadurch gekennzeichnet, dass der aus dem ersten Wärmetauscher (17) anfallende überhitzte Dampf (25) in die erste Brennkammer (7) eingeleitet wird, und dass ein aus einem zweiten Wärmetauscher anfallende überhitzte Dampf in die zweite Brennkammer (12) eingeleitet wird.

10. Verfahren nach Anspruch 1, dadurch gekennzeichnet, dass die zweite Brennkammer (9) durch Selbstzündung betrieben wird.

## Claims

1. Method of operating a power station plant which essentially comprises a gas-turbine group and a waste-heat steam generator (14, 28, 36) arranged downstream, through which exhaust gases (13) from the gas-turbine group flow, the gas-turbine group in turn essentially comprising a compressor unit (1), a first combustion chamber (4) acting downstream of the compressor unit, a first turbine (7) acting downstream of the first combustion chamber, a second combustion chamber (9) acting downstream of the first turbine, and a second turbine (12) acting downstream of the second combustion chamber, the combustion chambers being operated with a gaseous and/or liquid fuel (5, 10) and a portion of the superheated steam (15, 27, 35) produced in the waste-heat steam generator (14, 28, 36) being injected at a suitable point into the gas-turbine group, characterized in that the other portion of the saturated steam (16) arising in the waste-heat steam generator (14, 28, 36) and/or arising back-pressure steam (32) is directed via at least one heat exchanger (17) through which compressor air (18) flows, and in that superheated steam (25) arising from the heat exchanger (17) is likewise injected at a suitable point into the gas-turbine group.

2. Method according to Claim 1, characterized in that at least a portion of the steam (15, 27, 35) superheated in the waste-heat steam generator is added to the fuel (5, 10) of at least one combustion chamber (7, 12) [sic].

3. Method according to Claim 1, characterized in that at least a portion of the steam (15, 27, 35) superheated in the waste-heat steam generator is directed into at least one combustion chamber (7, 12) [sic].

4. Method according to Claim 1, characterized in that at least a portion of the steam (15, 27, 35) superheated in the waste-heat steam generator or of the saturated steam (16) or of the back-pressure steam (32) is used beforehand as a cooling medium for the hot structures of the gas-turbine group.

5. Method according to Claim 1, characterized in that at least a portion of the superheated steam (15, 27, 35) or the saturated steam (16) or the back-pressure steam (32) is used as driving means for the injection of the fuel (5, 10) into the relevant combustion chamber (7, 12) [sic].

6. Method according to Claim 1, characterized in that the back-pressure steam (32) flows out of a steam turbine (30) which acts downstream of the waste-heat steam generator (28, 36) and is operated with at least a portion of superheated steam (29) arising in the waste-heat steam generator (28, 36).

7. Method according to Claim 6, characterized in that a portion of the back-pressure steam (31) flowing out of the steam turbine (30) is directed at a suitable point into the gas-turbine group.

8. Method according to Claim 6, characterized in that the steam turbine (30) is operated as a component of a steam cycle arranged downstream of the gas-turbine group, and in that the steam of this steam cycle originates from the waste-heat steam generator which is operated with the exhaust gases from the gas-turbine group.

9. Method according to Claim 1, characterized in that the superheated steam (25) arising from the first heat exchanger (17) is directed into the first combustion chamber (7) [sic], and in that superheated steam arising from a second heat exchanger is directed into the second combustion chamber (12) [sic].

10. Method according to Claim 1, characterized in that the second combustion chamber (9) is operated by self-ignition.

## Revendications

1. Procédé pour la conduite d'une centrale électrique, qui se compose essentiellement d'un groupe de turbine à gaz et d'un générateur de vapeur à récupération (14, 28, 36) qui le suit, qui est traversé par des gaz brûlés (13) sortant du groupe de turbine à gaz, le groupe de turbine à gaz se composant à son tour essentiellement d'une unité de compresseur (1), d'une première chambre de combustion (4) opérant en aval de l'unité de compresseur, d'une première turbine (7) opérant en aval de la première chambre de combustion, d'une seconde chambre de combustion (9) opérant en aval de la première turbine et d'une seconde turbine (12) opérant en aval de la seconde chambre de combustion, dans lequel les chambres de combustion fonctionnent avec un combustible gazeux et/ou liquide (5, 10) et dans lequel une partie de la vapeur surchauffée (15, 27, 35) produite dans le générateur de vapeur à récupération (14, 28, 36) est insufflée en un endroit approprié dans le groupe de turbine à gaz, caractérisé en ce que l'autre partie de la vapeur saturée (16) générée dans le générateur de vapeur à récupération (14, 28, 36) et/ou d'une vapeur sous contre-pression générée (32) est conduite par au moins un échangeur de chaleur (17) parcouru par un air comprimé (18), et en ce qu'une vapeur surchauffée (25) émanant de l'échangeur de chaleur (17) est également insufflée en un endroit approprié dans le groupe de turbine à gaz.

2. Procédé suivant la revendication 1, caractérisé en ce qu'au moins une partie de la vapeur (15, 27, 35) surchauffée dans le générateur de vapeur à récupération est mélangée au combustible (5, 10) d'au moins une chambre de combustion (7, 12).

3. Procédé suivant la revendicarion 1, caractérisé en ce qu'au moins une partie de la vapeur (15, 27, 35) surchauffée dans le générateur de vapeur à récupération est introduite dans au moins une chambre de combustion (7, 12).

4. Procédé suivant la revendication 1, caractérisé en ce qu'au moins une partie de la vapeur (15, 27, 35) surchauffée dans le générateur de vapeur à récupération ou de la vapeur saturée (16) ou de la vapeur sous contre-pression (32) est utilisée à l'avance comme fluide de refroidissement pour les structures chaudes du groupe de turbine à gaz.

5. Procédé suivant la revendication 1, caractérisé en ce qu'au moins une partie de la vapeur surchauffée (15, 27, 35) ou de la vapeur saturée (16) ou de la vapeur sous contre-pression (32) est utilisée comme fluide propulseur pour l'injection du combustible (5, 10) dans la chambre de combustion (7, 12) concernée.

6. Procédé suivant la revendication 1, caractérisé en ce que la vapeur sous contre-pression (32) s'écoule hors d'une turbine à vapeur (30) opérant en aval du générateur de vapeur à récupération (28, 36), qui fonctionne avec au moins une partie d'une vapeur surchauffée (29) générée dans le générateur de vapeur à récupération (28, 36).

7. Procédé suivant la revendication 6, caractérisé en ce qu'une partie de la vapeur sous contre-pression (31) sortant de la turbine à vapeur (30) est introduite en un endroit approprié dans le groupe de turbine à gaz.

8. Procédé suivant la revendication 6, caractérisé en ce que la turbine à vapeur (30) fonctionne comme composant d'un circuit de vapeur faisant suite au groupe de turbine à gaz, et en ce que la vapeur de ce circuit de vapeur provient du générateur de vapeur à récupération, qui fonctionne avec les gaz brûlés venant du groupe de turbine à gaz.

9. Procédé suivant la revendication 1, caractérisé en ce que la vapeur surchauffée (25) provenant du premier échangeur de chaleur (17) est introduite dans la première chambre de combustion (7), et en ce qu'une vapeur surchauffée provenant d'un second échangeur de chaleur est introduite dans la seconde chambre de combustion (12).

10. Procédé suivant la revendication 1, caractérisé en ce que la seconde chambre de combustion (9) fonctionne par auto-allumage.
